# EUROPÄISCHE PATENTSCHRIFT

(11) **EP 3 762 700 B1**
(45) Veröffentlichungstag und Bekanntmachung des Hinweises auf die Patenterteilung: **16.11.2022**
(21) Anmeldenummer: 19714308.4
(22) Anmeldetag: 05.03.2019
(51) Int. Cl.: G01M 3/34, H02K 15/16

(54) **AUSWUCHTEN EINES ROTATIONSSYMMETRISCHEN BAUTEILS, INSBESONDERE ROTORBAUTEILS**
BALANCING OF A ROTATIONALLY SYMMETRICAL COMPONENT, PARTICULARLY A ROTOR COMPONENT
ÉQUILIBRAGE D'UNE PIÈCE À SYMÉTRIE DE ROTATION, EN PARTICULIER D'UNE PIÈCE DE ROTOR

(30) Priorität: 05.03.2018 DE 102018203214
(43) Veröffentlichungstag der Anmeldung: 13.01.2021
(73) Patentinhaber: MTU Aero Engines AG, 80995 München (DE)
(72) Erfinder: WEBER, Michael, 80809 München (DE); SENUSTA, Onur, 85757 Karlsfeld (DE)
(86) Internationale Anmeldenummer: PCT/DE2019/000052
(87) Internationale Veröffentlichungsnummer: WO 2019/170184

(56) Entgegenhaltungen:
- WO-A1-2004/001363
- WO-A1-2004/048918
- DE-A1-102016 112 521

## Beschreibung

Die vorliegende Erfindung betrifft ein Verfahren zum Auswuchten eines rotationssymmetrischen Bauteils, insbesondere Rotorbauteils, insbesondere einer Strömungsmaschine, mithilfe einer Auswuchteinrichtung, ein Verfahren zum Ermitteln einer Wuchtentnahme hierfür, sowie ein System und ein Computerprogrammprodukt zur Durchführung eines dieser Verfahren.

Rotationssymmetrische Bauteile, insbesondere Gasturbinen-Rotorbauteile, insbesondere von Flugtriebwerken, sollen höchstens eine geringe Unwucht aufweisen, um ungünstige Belastungen im Betrieb zu vermeiden.

In den Druckschriften WO 2004 001 363 A1, DE 10 2016 112 521 A1 und WO 2004 048 918 A1 wird das Einbringen von Vertiefungen in rotationssymetrischen Bauteilen zur Wuchtentnahme offenbart wobei die Bearbeitungslänge und -tiefe bestimmt wird.

Eine Aufgabe einer Ausführung der vorliegenden Erfindung ist es, ein Auswuchten von rotationssymmetrischen Bauteilen, insbesondere Rotorbauteilen zu verbessern.

Diese Aufgabe wird durch ein Verfahren mit den Merkmalen des Anspruchs 1 gelöst. Ansprüche 9, 10 stellen ein System bzw. Computerprogrammprodukt zur Durchführung eines hier beschriebenen Verfahrens unter Schutz. Vorteilhafte Ausführungsformen der Erfindung sind Gegenstand der Unteransprüche.

Nach einem Aspekt der vorliegenden Erfindung wird bei einem Verfahren zum Ermitteln einer Wuchtentnahme für eine Auswuchteinrichtung zum Auswuchten eines rotationssymmetrischen Bauteils, insbesondere Rotorbauteils eine Kombination von
- Bearbeitungslänge und
- Bearbeitungstiefe
   unter Berücksichtigung bzw. -achtung einer vorgegebenen
- maximal( zulässig)en Bearbeitungslänge bzw. Bearbeitungslängenobergrenze
   und
- minimal( möglichen Bearbeitungstiefe bzw. Bearbeitungstiefenuntergrenze,
   in einer Ausführung zusätzlich unter Berücksichtigung bzw. -achtung einer vorgegebenen
- minimal( möglich)en Bearbeitungslänge bzw. Bearbeitungslängenuntergrenze und/oder
- maximal( zulässig)en Bearbeitungstiefe bzw. Bearbeitungstiefenobergrenze, derart, insbesondere mit der Maßgabe, berechnet, dass unter (unter Berücksichtigung bzw. -achtung der vorgegebenen maximalen und gegebenenfalls minimalen Bearbeitungslänge und minimalen und gegebenenfalls maximalen Bearbeitungstiefe bzw. Bearbeitungslängen- bzw. -tiefenober- bzw. untergrenze(n)) zulässigen, insbesondere durch die bzw. mit der Auswuchteinrichtung umsetzbaren, Kombinationen zur Kompensation derselben Unwucht bzw. unter (aus)wucht(wirkungs)gleichen Kombinationen
- die Bearbeitungslänge der berechneten Kombination größer als die Bearbeitungslänge wenigstens einer, insbesondere mehrerer, vorzugsweise der Mehrzahl, insbesondere aller, anderen (der) zulässigen Kombination(en) und
- zugleich die Bearbeitungstiefe der berechneten Kombination kleiner als die Bearbeitungstiefe dieser anderen Kombination(en) ist.

Hierdurch wird in einer Ausführung die Wuchtentnahme über einen größeren, insbesondere im Rahmen der vorgegebenen maximalen Bearbeitungslänge möglichst großen, Umfangsbereich des rotationssymmetrischen Bauteils verteilt. Dadurch kann in einer Ausführung eine Fehlertoleranz gegenüber einer gemessenen Winkelposition der Unwucht verbessert werden.

Das rotationssymmetrische Bauteil ist in einer Ausführung als Rotorbauteil dazu vorgesehen, insbesondere eingerichtet, im Betrieb um eine Drehachse, in einer Ausführung eine (Haupt)Maschinenachse einer Strömungsmaschine, insbesondere einer Gasturbine, in einer Ausführung eines Flugtriebwerks, zu rotieren. Es kann insbesondere einen, in einer Ausführung integral ausgebildeten, beschaufelten Rotor der Strömungsmaschine, insbesondere Gasturbine, aufweisen, insbesondere ein solcher sein, insbesondere also eine sogenannte Blisk.

Bei bzw. für solche rotationssymmetrischen Bauteile, insbesondere Rotorbauteile, bei denen einerseits Unwuchten besonders ungünstig sind, und die andererseits zunehmend in größerer Stückzahl, insbesondere wenigstens teilautomatisiert, hergestellt werden, kann die vorliegende Erfindung mit besonderem Vorteil verwendet werden, so dass sie nachfolgend insbesondere mit Bezug hierauf erläutert wird, ohne jedoch darauf beschränkt zu sein.

Die Bearbeitungstiefe kann insbesondere eine radiale und/oder maximale oder mittlere Tiefe, insbesondere eine radiale und/oder maximale oder mittlere Nuttiefe der Wuchtentnahme bzw. eine radiale und/oder maximale oder mittlere Zustelltiefe, insbesondere Spantiefe, der Auswuchteinrichtung, bestimmen, insbesondere sein.

Die Bearbeitungslänge kann insbesondere eine in Umfangsrichtung um die Drehachse des rotationssymmetrischen Bauteils, insbesondere Rotorbauteils gemessene Länge der Wuchtentnahme zwischen einem Anfang und einem Ende (in Umfangsrichtung ) einer Nut bzw. Zustellung oder eines Nutgrundes bzw. eines Abschnitts konstanter radialer Tiefe bzw. Zustellung der Wuchtentnahme bzw. ein(en) entsprechender/n Winkel, beispielsweise Fräswinkel, bestimmen, insbesondere sein.

Zwei Kombinationen von Bearbeitungslänge und -tiefe zur Kompensation derselben Unwucht im Sinne der vorliegenden Erfindung definieren bzw. bewirken in einer Ausführung dasselbe Produkt aus einer Masse der Wuchtentnahme und deren Schwerpunktabstand zur Drehachse des rotationssymmetrischen Bauteils, insbesondere Rotorbauteils. Mit anderen Worten sind zwei Kombinationen insbesondere dann Kombinationen von Bearbeitungslänge und -tiefe zur Kompensation derselben Unwucht im Sinne der vorliegenden Erfindung, wenn die beiden Kombinationen (insbesondere bei ansonsten gleichen Parametern bzw. Randbedingungen) dasselbe Produkt aus Masse und Schwerpunktabstand der Wuchtentnahme zur Drehachse des rotationssymmetrischen Bauteils definieren bzw. bewirken.

Entsprechend wird in einer Ausführung die bei bzw. durch eine Bearbeitungslänge und -tiefe kompensierte Unwucht, insbesondere also das Produkt aus Masse und Schwerpunktabstand der Wuchtentnahme zur Drehachse des rotationssymmetrischen Bauteils bei bzw. durch diese(r) Bearbeitungslänge und -tiefe, für eine oder mehrere zulässige Kombination von Bearbeitungslänge und -tiefe berechnet.

In einer Ausführung taucht ein Werkzeug der Auswuchteinrichtung zum Bearbeiten auf einer Einfahrbahn bis auf die Bearbeitungstiefe in das rotationssymmetrische Bauteil ein und verlässt diese auf einer Ausfahrbahn. Dann kann die Bearbeitungslänge im Sinne der vorliegenden Erfindung die Länge (in Umfangsrichtung) zwischen Beginn der Einfahrbahn und Ende der Ausfahrbahn, d.h. die Gesamtlänge der Wuchtentnahme in Umfangsrichtung, oder auch die Länge (in Umfangsrichtung) zwischen Ende der Einfahrbahn und Beginn der Ausfahrbahn, d.h. die Bogenlänge der Wuchtentnahme bzw. des Nutgrundes in Umfangsrichtung bestimmen, insbesondere sein.

In einer Ausführung bestimmt die Bearbeitungstiefe einen Materialabtrag an einem Innenumfang des rotationssymmetrischen Bauteils. Mit anderen Worten ist in einer Ausführung die Wuchtentnahme eine Wuchtentnahme an einem Innenumfang des rotationssymmetrischen Bauteils.

Hierdurch kann in einer Ausführung eine Fehlertoleranz bezüglich einer Winkelposition der Wuchtentnahme verbessert werden.

In einer Ausführung bestimmt die Bearbeitungstiefe einen Materialabtrag an einem Außenumfang des rotationssymmetrischen Bauteils. Mit anderen Worten ist in einer Ausführung die Wuchtentnahme eine Wuchtentnahme an einem Außenumfang des rotationssymmetrischen Bauteils.

Hierdurch werden in einer Ausführung geringere Bearbeitungstiefen benötigt.

In einer ergänzenden oder alternativen Ausführung kann das Werkzeug zum Bearbeiten auf einer horizontal zur zu bearbeitenden Oberfläche verlaufenden Bahn in das rotationssymmetrische Bauteil einfahren. Ein auf einer solchen entlang der zum Bauteil gesehenen radialen Richtung verlaufenden Bahn geführtes Werkzeug kann auch an engere Stellen, beispielsweise an einen Zwischenraum in einem Rotorverbund, gelangen und Unwuchten ausgleichen, die über eine in axialer Richtung verlaufende Bahn nicht erreicht werden kann. Dadurch kann insbesondere eine Demontage aufeinander abgestimmter aneinanderliegender Rotorbauteil vermieden werden. Unter der besagten Länge kann dann auch die Länge zwischen Beginn der Einfahrbahn und Ende der Ausfahrbahn in radialer Richtung verstanden werden.

In einer Ausführung sind, insbesondere werden, die maximale und in einer Weiterbildung auch die minimale Bearbeitungslänge und/oder die minimale und in einer Weiterbildung auch die maximale Bearbeitungstiefe durch einen Anwender bzw. eine Benutzereingabe und/oder in Abhängigkeit von der Auswuchteinrichtung und/oder dem rotationssymmetrischen Bauteils vorgegeben.

Hierdurch können vorteilhaft Bearbeitungsrandbedingungen wie insbesondere minimale Zustelltiefen(änderungen) der Auswuchteinrichtung berücksichtigt und/oder verschiedenartige rotationssymmetrische Bauteile spezifisch(er) ausgewuchtet werden. Hierdurch kann die Anzahl der zulässigen Kombinationen zur Kompensation reduziert werden.

Als besonders vorteilhaft haben sich überraschenderweise eine maximale Bearbeitungs(kreisbogen)länge von höchstens 180°, insbesondere von höchstens 150°, vorzugsweise höchstens 130° und eine minimale Bearbeitungstiefe von wenigstens 0,005 mm, insbesondere von wenigstens 0,01 mm, und/oder höchstens 0,5 mm, insbesondere von höchstens 0,1 mm, herausgestellt, insbesondere in Kombination miteinander.

In einer Ausführung wird die Wuchtentnahme auf Basis bzw. in Abhängigkeit von, insbesondere zur Kompensation, einer gemessenen Unwucht des zu bearbeitenden rotationssymmetrischen Bauteils, insbesondere Rotorbauteils ermittelt, insbesondere auf Basis bzw. unter Berücksichtigung einer vorgegeben Unwuchttoleranz, die in einer Ausführung durch einen Anwender und/oder in Abhängigkeit von dem rotationssymmetrischen Bauteil, insbesondere einer hierfür erforderlichen Unwuchttoleranz, und/oder der Auswuchteinrichtung, insbesondere einer hierdurch erreichbaren Auswuchttoleranz, vorgegeben wird bzw. ist.

Hierdurch können jeweils, insbesondere in Kombination miteinander, Randbedingungen, insbesondere maschinelle und/oder fertigungstechnische, Randbedingungen der Auswuchteinrichtung und zusätzlich oder alternativ, insbesondere aerodynamische und/oder mechanische, Randbedingungen des rotationssymmetrischen Bauteils, insbesondere Rotorbauteils berücksichtigt werden.

In einer Ausführung wird das Verfahren zum Ermitteln der Wuchtentnahme numerisch durchgeführt.

Hierdurch kann in einer Ausführung die Präzision verbessert werden.

Zusätzlich oder alternativ wird das Verfahren in einer Ausführung durch eine Steuerung (zum Steuern) der Auswuchteinrichtung durchgeführt.

Hierdurch kann in einer Ausführung die Bearbeitung beschleunigt werden.

Zusätzlich oder alternativ wird das Verfahren in einer Ausführung iterativ durchgeführt, insbesondere also die Bearbeitungslänge und/oder -tiefe schrittweise vergrößert, in einer Ausführung in, insbesondere geschachtelten, Iterationsschleifen, und dabei in einer Ausführung jeweils die bei bzw. durch diese(r) Bearbeitungslänge bzw. -tiefe kompensierte Unwucht, insbesondere also das Produkt aus Masse und Schwerpunktabstand der Wuchtentnahme zur Drehachse des rotationssymmetrischen Bauteils bei bzw. durch diese(r) Bearbeitungslänge bzw. -tiefe, berechnet.

Dies ist in einer Ausführung mit geringer Rechenzeit und/oder -leistung möglich und daher insbesondere zur Durchführung auf CNC-Maschinen oder dergleichen besonders vorteilhaft.

In einer Weiterbildung wird beim Durchführen des Verfahrens eine Schrittweite zum iterativen Ermitteln der Bearbeitungslänge und/oder -tiefe adaptiv verändert, insbesondere, vorzugsweise schrittweise, reduziert.

Hierdurch kann in einer Ausführung eine Rechenzeit vorteilhaft reduziert und/oder eine Genauigkeit verbessert werden.

Nach einem Aspekt der vorliegenden Erfindung umfasst ein Verfahren zum Auswuchten des rotationssymmetrischen Bauteils, insbesondere Rotorbauteils mithilfe der Auswuchteinrichtung die Schritte:
- Ermitteln der Wuchtentnahme mittels eines hier beschriebenen Verfahrens, insbesondere also iterativ und/oder durch eine Steuerung (zum Steuern) der Auswuchteinrichtung; und
- Bearbeiten, insbesondere materialabtragendes, in einer Ausführung spanendes Bearbeiten, des rotationssymmetrischen Bauteils auf Basis, insbesondere zur Umsetzung, der ermittelten Wuchtentnahme.

In einer Ausführung wird vor dem Ermitteln der Wuchtentnahme, insbesondere durch die Auswucht- oder eine hiervon separate Messeinrichtung, die (zu kompensierende) Unwucht des rotationssymmetrischen Bauteils gemessen.

Zusätzlich oder alternativ wird in einer Ausführung nach dem Bearbeiten des rotationssymmetrischen Bauteils, insbesondere durch die Auswucht- oder eine bzw. die hiervon separate Messeinrichtung, die (verbliebene Rest)Unwucht des rotationssymmetrischen Bauteils gemessen.

Überschreitet diese eine vorgegebene maximal zulässige Unwucht, wird das Verfahren in einer Ausführung, gegebenenfalls mehrfach, erneut durchgeführt, wobei die Wuchtentnahme dann auf Basis bzw. in Abhängigkeit von, insbesondere zur Kompensation, dieser verbliebenen Restunwucht ermittelt wird.

Nach einem Aspekt der vorliegenden Erfindung ist ein System, insbesondere hard- und/oder software-, insbesondere programmtechnisch, zur Durchführung eines hier beschriebenen Verfahrens eingerichtet und/oder weist auf:
- Mittel zum Berechnen einer Kombination von Bearbeitungslänge und -tiefe unter Berücksichtigung einer vorgegebenen maximalen Bearbeitungslänge und minimalen Bearbeitungstiefe derart, dass unter zulässigen Kombinationen zur Kompensation derselben Unwucht die Bearbeitungslänge der berechneten Kombination größer als die Bearbeitungslänge wenigstens einer anderen zulässigen Kombination und zugleich die Bearbeitungstiefe der berechneten Kombination kleiner als die Bearbeitungstiefe dieser anderen Kombination ist.

In einer Ausführung weist das System bzw. sein(e) Mittel auf:
- Mittel zum Vorgeben der maximalen Bearbeitungslänge und/oder minimalen Bearbeitungstiefe durch einen Anwender und/oder in Abhängigkeit von der Auswuchteinrichtung und/oder dem rotationssymmetrischen Bauteil, insbesondere Rotorbauteil; und/oder
- Mittel zum Ermitteln der Wuchtentnahme numerisch, durch eine Steuerung der Auswuchteinrichtung und/oder, insbesondere schrittweitenadaptiv, iterativ, insbesondere unter schrittweiser Vergrößerung der Bearbeitungslänge und/oder -tiefe, und/oder auf Basis einer gemessenen Unwucht des zu bearbeitenden rotationssymmetrischen Bauteils, insbesondere auf Basis einer, insbesondere durch einen Anwender und/oder in Abhängigkeit von dem rotationssymmetrischen Bauteils und/oder der Auswuchteinrichtung, vorgegebenen Unwuchttoleranz.

Nach einem Aspekt der vorliegenden Erfindung weist ein System zum Auswuchten eines bzw. des rotationssymmetrischen Bauteils, insbesondere Rotorbauteils, insbesondere einer Strömungsmaschine, mithilfe einer Auswuchteinrichtung, auf:
- Mittel zum Ermitteln der Wuchtentnahme aufweisend Mittel zum Berechnen einer Kombination von Bearbeitungslänge und -tiefe unter Berücksichtigung einer vorgegebenen maximalen Bearbeitungslänge und minimalen Bearbeitungstiefe derart, dass unter zulässigen Kombinationen zur Kompensation derselben Unwucht die Bearbeitungslänge der berechneten Kombination größer als die Bearbeitungslänge wenigstens einer anderen zulässigen Kombination und zugleich die Bearbeitungstiefe der berechneten Kombination kleiner als die Bearbeitungstiefe dieser anderen Kombination ist; und
- Mittel zum Bearbeiten des rotationssymmetrischen Bauteils, insbesondere Rotorbauteils auf Basis der ermittelten Wuchtentnahme;
   und in einer Weiterbildung
- Mittel zum Messen der Unwucht des rotationssymmetrischen Bauteils, insbesondere Rotorbauteils vor dem Ermitteln der Wuchtentnahme und/oder nach dem Bearbeiten des rotationssymmetrischen Bauteils, insbesondere Rotorbauteils.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere eine Wuchtentnahme ermitteln bzw. die Auswuchteinrichtung betreiben, insbesondere steuern, kann. Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch das System bzw. sein(e) Mittel.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: ein System zum Auswuchten eines rotationssymmetrischen Bauteils nach einer Ausführung der vorliegenden Erfindung;
- Fig. 2: ein Verfahren zum Auswuchten des rotationssymmetrischen Bauteils nach einer Ausführung der vorliegenden Erfindung; und
- Fig. 3: ein System zum Auswuchten eines Verbundes aus rotationssymmetrischen Bauteilen.

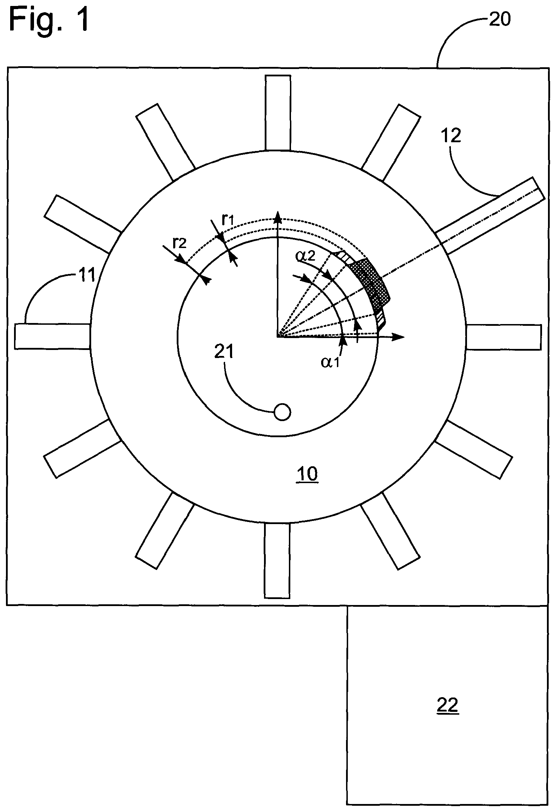

Fig. 1 zeigt ein System zum Auswuchten eines rotationssymmetrischen Bauteils, insbesondere Rotorbauteils exemplarisch in Form einer Blisk 10 einer Gasturbine mit integral ausgebildeten Laufschaufeln 11, von denen wiederum exemplarisch eine Laufschaufel 12 radial länger ist, so dass die Blisk 10 an dieser, durch eine Strichpunktlinie angedeuteten Position eine Unwucht aufweist.

Das System weist eine Auswuchteinrichtung in Form einer Fräsmaschine 20 mit einem Fräser(werkzeug) 21 und einer Steuerung 22 auf.

In einem ersten Schritt S10 wird auf einer separaten Messeinrichtung (nicht dargestellt) in an sich bekannter Weise die Unwucht in Form eines Produkts der Dimension [Masse^{∗}Radius] und deren (Winkel)Position in einem bauteilfesten Referenzsystem, das in Fig. 1 durch ein Koordinatensystem angedeutet ist, gemessen.

In einem zweiten Schritt S20 wird zunächst geprüft, ob die gemessene Unwucht (bereits) kleiner als ein zulässiger Maximalwert für die Blisk 10 ist. Ist dies der Fall (S20: "Y"), wird das Verfahren beendet und die Blisk 10 als ausgewuchtet klassifiziert (S25).

Andernfalls (S20: "N") wird die Blisk 10 in der Fräsmaschine 20 befestigt, deren Steuerung 22 nachfolgende Schritte S30 - S85 durchführt.

In einem Schritt S30 werden auf Basis von eingelesenen Anwendervorgaben verschiedene Werte initialisiert, insbesondere Anfangs- und Maximalwerte für die iterative Ermittlung einer Spantiefe und Bearbeitungskreisbogenlänge, insbesondere eine minimale und maximale Zustelltiefe des Fräsers 21 sowie eine maximale Bearbeitungskreisbogenlänge.

In Fig. 1 ist hierzu exemplarisch eine erste Spantiefe r₁ bei einer minimal mit der Fräsmaschine 20 darstellbaren Zustellung sowie eine zweite Spantiefe r₂ angedeutet.

In Fig. 1 ist ebenfalls exemplarisch eine Bearbeitungs(kreisbogen)länge in Form eines Fräswinkels α₁ bzw. α₂ angedeutet. Zur Illustration bezeichnet α₁ bzw. α₂ hier die Gesamtlänge der jeweiligen Wuchtentnahme bzw. Nut. In einer Abwandlung kann gleichermaßen auch die Länge des Nutgrundes konstanter Frästiefe bzw. der entsprechende Fräswinkel als Bearbeitungslänge genutzt werden, so dass in diesem Fall eine Bearbeitungslänge gleich Null einem Eintauchen auf einer durch den Fräser 21 bestimmten Einfahrbahn bis auf die Bearbeitungstiefe und sofortigem Wiederausfahren auf einer durch den Fräser 21 bestimmten Ausfahrbahn entspricht.

In einem Schritt S30 berechnet die Steuerung 22 für die aktuelle Bearbeitungstiefe und -länge die hierdurch zu kompensierende Unwucht und vergleicht diese in einem Schritt S50 mit der gemessenen Unwucht.

Ist die durch die aktuelle Bearbeitungstiefe und -länge zu kompensierende Unwucht (noch) kleiner als die gemessene Unwucht abzüglich einer vorgegebenen Unwuchttoleranz (S50: "Y"), fährt die Steuerung mit Schritt S60 fort.

Andernfalls (S50: "N") fährt die Steuerung mit Schritt S80 fort und prüft, ob die durch die aktuelle Bearbeitungstiefe und -länge zu kompensierende Unwucht (schon) größer als die gemessene Unwucht zuzüglich der vorgegebenen Unwuchttoleranz ist.

Ist dies nicht der Fall, d.h. liegt die durch die aktuelle Bearbeitungstiefe und -länge zu kompensierende Unwucht in einem durch die vorgegebene Unwuchttoleranz begrenzten Toleranzbereich um die gemessene Unwucht (S50: "N" UND S80: "N"), wird in einem Schritt S90 die Blisk 10 mit dieser aktuellen Bearbeitungstiefe und -länge bearbeitet, d.h. der Fräser 21 symmetrisch zur gemessenen Position der Unwucht auf der Einfahrbahn bis auf die aktuelle Bearbeitungstiefe ein-, auf dieser bis zur Ausfahrbahn und auf dieser aus der Blisk 10 ausgefahren. Die Ein- und Ausfahrbahn kann beispielsweise durch den maximal zulässigen bzw. möglichen Vorschub des Fräsers 21 bestimmt sein.

Anschließend wird die bearbeitete Blisk 10 entnommen und auf der separaten Messeinrichtung erneut ihre (verbliebene Rest)Unwucht gemessen und das Verfahren erneut durchgeführt.

In Schritt S60, d.h. wenn die durch die aktuelle Bearbeitungstiefe und -länge zu kompensierende Unwucht (noch) kleiner als die gemessene Unwucht abzüglich der vorgegebenen Unwuchttoleranz ist bzw. dies in Schritt S50 festgestellt wurde, prüft die Steuerung, ob die aktuelle Bearbeitungslänge bereits der vorgegebenen maximalen Bearbeitungslänge entspricht bzw. diese überschreitet.

Ist diese bei der aktuellen Iteration noch nicht erreicht (S60: "N"), wird die Bearbeitungslänge in einem Schritt S65 um eine vorgegebene diskrete Stufe erhöht und damit Schritt S40 erneut durchgeführt.

Auf diese Weise wird somit bei einer Iterationsstufe für dieselbe aktuelle Bearbeitungstiefe, beginnend mit der vorgegebenen minimalen Spantiefe, schrittweise die Bearbeitungslänge erhöht, bis die durch die aktuelle Bearbeitungstiefe und -länge zu kompensierende Unwucht nicht mehr kleiner als die gemessene Unwucht abzüglich der vorgegebenen Unwuchttoleranz (S50: "N") oder aber in dieser Iterationsstufe die vorgegebene maximale Bearbeitungslänge erreicht ist (S60: "Y").

Ist Letzteres der Fall, d.h. die vorgegebene maximale Bearbeitungslänge erreicht (S60: "Y"), prüft die Steuerung in Schritt S70, ob die aktuelle Bearbeitungstiefe bereits der vorgegebenen maximalen Bearbeitungstiefe entspricht.

Ist dieser bei der aktuellen Iteration noch nicht erreicht (S70: "N"), wird in einem Schritt S75 die aktuelle Bearbeitungstiefe um eine vorgegebene diskrete Stufe erhöht, die der minimalen Spantiefe entspricht, die aktuelle Bearbeitungslänge wieder auf ihren Anfangswert gesetzt und damit Schritt S40 erneut durchgeführt.

Auf diese Weise wird somit in einer inneren Iterationsschleife zunächst jeweils schrittweise die Bearbeitungslänge und gegebenenfalls in einer äußeren Iterationsschleife jeweils schrittweise die Bearbeitungstiefe erhöht.

Wurde mit der vorgegebenen maximalen Bearbeitungslänge (S60: "Y") die vorgegebene maximale Bearbeitungstiefe erreicht (S70: "N"), kann die gemessene Unwucht nicht kompensiert werden und das Verfahren wird mit einer Fehlermeldung abgebrochen (S76).

Falls die durch die aktuelle Bearbeitungstiefe und -länge zu kompensierende Unwucht (schon) größer als die gemessene Unwucht zuzüglich der vorgegebenen Unwuchttoleranz ist (S80: "Y") fährt die Steuerung mit Schritt S85 fort, in dem sie die aktuelle Bearbeitungslänge auf die vorhergehende Bearbeitungslänge zurücksetzt, die Schrittweite zur schrittweisen Erhöhung der Bearbeitungslänge (vgl. Schritt S65) um einen vorgegebenen Faktor, beispielsweise 10, reduziert und mit dieser solcherart adaptiv angepassten Schrittweite für die (Erhöhung der) Bearbeitungslänge Schritt S40 erneut durchführt.

Auf diese Weise kann zunächst rasch ein (Anfangs)Intervall für die Bearbeitungslänge aufgefunden und dies anschließend sukzessive verfeinert werden.

Das Verfahren ist in Fig. 1 stark schematisiert veranschaulicht: zunächst wird bei der ersten Bearbeitungstiefe r₁ sukzessive die Bearbeitungslänge erhöht und geprüft, ob damit die gemessene Unwucht, die im Ausführungsbeispiel durch die längere Schaufel 12 angedeutet ist, kompensiert werden kann. (Nur) Wenn dies (auch mit der maximal zulässigen Bearbeitungslänge) nicht der Fall ist, wird die Bearbeitungstiefe auf r2 vergrößert und wiederum, ausgehend vom gleichen Anfangswert, sukzessive die Bearbeitungslänge erhöht und geprüft, ob damit nun die gemessene Unwucht kompensiert werden kann.

Wie ebenfalls in Fig. 1 schematisch veranschaulicht, kann eine gemessene Unwucht durch eine Vielzahl unterschiedlicher Kombinationen von Bearbeitungstiefe und -länge kompensiert werden, beispielweise durch die in Fig. 1 angedeutete Kombination aus Bearbeitungstiefe r₁ und zugehöriger Bearbeitungslänge α₁ oder die Kombination aus (größerer) Bearbeitungstiefe r₂ und zugehöriger (kürzerer) Bearbeitungslänge α₂, wobei durch das Verfahren automatisch die Kombination mit der kleinsten Bearbeitungstiefe unter Ausnutzung der zulässigen Bearbeitungslänge berechnet wird.

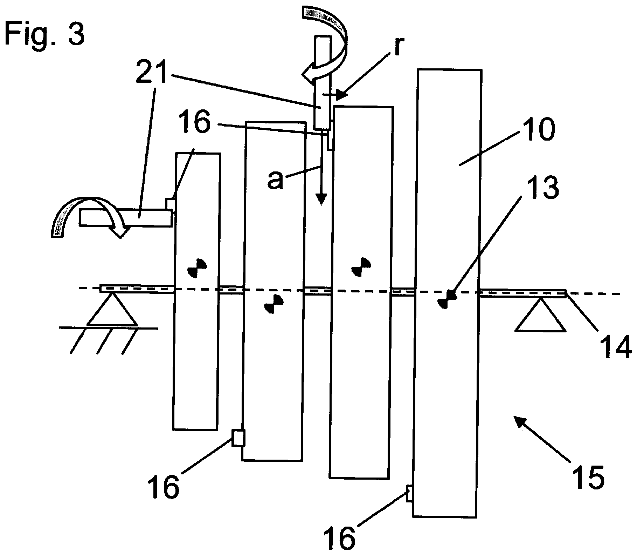

In Fig. 3 ist schematisch ein System zum Auswuchten eines Verbundes 15 aus Rotorbauteilen 10 beziehungsweise rotationssymmetrischer Bauteile 10 gezeigt. Die einzelnen Rotorbauteile 10 sind in einem Verbund miteinander gekoppelt, im Einbauzustand beispielsweise über eine Rotorachse 14 oder wenn der Verbund 15 beispielsweise komplett aus einem Triebwerk ausgebaut wird, auch über nicht dargestellte, zwischen den einzelnen Rotorbauteilen 10 angeordnete Verbindungsstücke und/oder sogenannte Rotorarme.

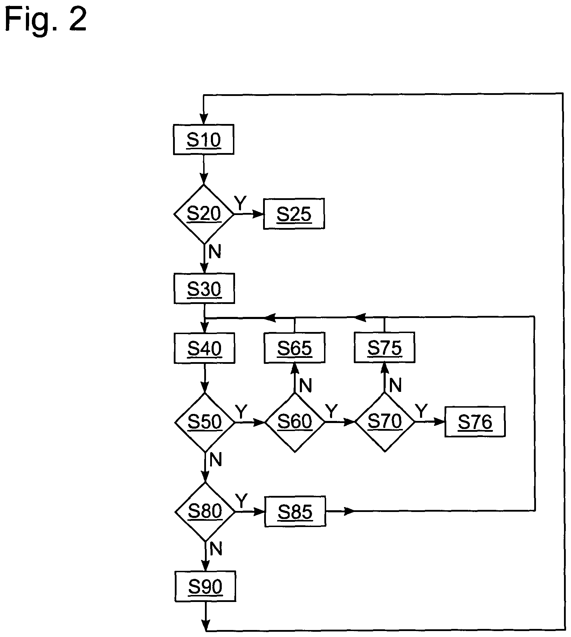

Entsprechend dem anhand der Fig. 2 beschriebenen Verfahren werden zunächst die Unwucht(en) für jedes Rotorbauteil 10 und/oder für den gesamten Verbund 15 ermittelt. Die Ermittlung kann aufgrund einer einzelnen Abweichung eines Schwerpunktes 13 eines Rotorbauteils 10 erfolgen. Es kann aber auch vorgesehen sein, dass zumindest einige oder alle der Schwerpunkte 13 einiger oder sämtlicher Rotorbauteile 10 des Verbundes mit in die Ermittlung einfließen. Die so ermittelten Unwuchtstellen 16 sollen dann durch einen oder mehrere, möglicherweise unterschiedliche Fräser 21 entnommen werden.

Dabei kann es vorkommen, dass wie in Fig. 3 dargestellt Unwuchtstellen 16 derart ermittelt werden, dass eine Bearbeitung durch eine Materialentnahme mit einem in Richtung der Rotorachse 14 eingeführten Fräser 21 nur schwer möglich wäre, eine Bearbeitung in dieser axialen Richtung unvorteilhaft wäre oder aber eine Demontage des Verbundes 15 in die einzelnen Rotorbauteile 10 nötig wäre.

In einem solchen Fall wird ein Fräser 21 im Wesentlichen senkrecht zur Rotorachse 14 des Verbundes 15 oder des Rotorbauteils 10, das heißt in radialer Richtung in die gewünschte Lage gebracht, um Material in der nötigen radialen Bearbeitungstiefe r und radialen Bearbeitungslänge a entnehmen zu können. Es kann zusätzlich vorgesehen sein, dass der Fräser 21 im Anschluss einen Winkelbereich α (nicht dargestellt) in Umfangsrichtung abfahren. Der Winkelbereich α kann ebenfalls in die Ermittlung der Unwucht einfließen.

Im Falle eines Verbundes 15 kann vorgesehen sein, dass die Schritte S10 bis S90 sämtliche Kombinationen aus Bearbeitungstiefe und Bearbeitungslänge nacheinander, das heißt die Schritte S10 bis S90 für jedes einzelne Rotorbauteil 10 durchlaufen, dann aber in Relation zueinander gesetzt werden. Es kann auch vorgesehen sein, dass zunächst sämtliche Unwuchten des gesamten Verbundes 15 ermittelt werden, mit anderen Worten die Gesamtunwucht des Verbundes 15 ermittelt wird. Dabei können beispielsweise die Kombinationen der einzelnen Bearbeitungstiefe und Bearbeitungslänge der einzelnen Rotorbauteile miteinander verglichen werden. Dabei kann geprüft werden, ob die Unwuchten zueinander Kompatibel sind und nicht eine unzulässige Belastung für den Verbund entsteht, und dies kann dann vorteilhaft gezielt vermieden werden.

Obwohl in der vorhergehenden Beschreibung exemplarische Ausführungen erläutert wurden, sei darauf hingewiesen, dass eine Vielzahl von Abwandlungen möglich ist.

Beispielsweise kann in einer Ausführung geprüft werden, ob selbst mit minimal( möglich- bzw. zulässig)er Spantiefe und Bearbeitungslänge die Wuchtentnahme bereits zu groß wäre und in diesem Fall das Verfahren mit einer Fehlermeldung abgebrochen werden.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 10: Blisk (rotationssymmetrisches Bauteil)
- 11, 12: Laufschaufel
- 13: Schwerpunkt (eines rotationssymmetrischen Bauteils)
- 14: Rotationsachse
- 15: Verbund (aus rotationssymmetrischen Bauteilen)
- 16: Unwuchtstelle
- 20: Fräsmaschine (Auswuchteinrichtung)
- 21: Fräser
- 22: Steuerung

- r₁, r₂: Bearbeitungstiefe
- α₁, α₂: Bearbeitungslänge
- r: radiale Bearbeitungstiefe
- a: radiale Bearbeitungslänge

## Patentansprüche

1. Verfahren zum Ermitteln einer Wuchtentnahme für eine Auswuchteinrichtung (20) zum Auswuchten eines rotationssymmetrischen Bauteils, insbesondere Rotorbauteils (10), insbesondere einer Strömungsmaschine, wobei eine Kombination von Bearbeitungslänge (α₁, α₂, a) und -tiefe (r₁, r₂, r) unter Berücksichtigung einer vorgegebenen maximalen Bearbeitungslänge und minimalen Bearbeitungstiefe derart berechnet wird (S30-S85), dass unter zulässigen Kombinationen zur Kompensation derselben Unwucht die Bearbeitungslänge der berechneten Kombination größer als die Bearbeitungslänge wenigstens einer anderen zulässigen Kombination und zugleich die Bearbeitungstiefe der berechneten Kombination kleiner als die Bearbeitungstiefe dieser anderen Kombination ist.

2. Verfahren nach dem vorhergehenden Anspruch, **dadurch gekennzeichnet, dass** die Bearbeitungstiefe einen Materialabtrag an einem Innen- oder Außenumfang des rotationssymmetrischen Bauteils bestimmt.

3. Verfahren nach einem der vorhergehenden Ansprüche, **dadurch gekennzeichnet, dass** die maximale Bearbeitungslänge und/oder minimale Bearbeitungstiefe durch einen Anwender und/oder in Abhängigkeit von der Auswuchteinrichtung und/oder dem rotationssymmetrischen Bauteil vorgegeben sind.

4. Verfahren nach einem der vorhergehenden Ansprüche, **dadurch gekennzeichnet, dass** die Wuchtentnahme auf Basis einer gemessenen Unwucht des zu bearbeitenden rotationssymmetrischen Bauteils, insbesondere auf Basis einer, insbesondere durch einen Anwender und/oder in Abhängigkeit von dem rotationssymmetrischen Bauteil, insbesondere Rotorbauteil und/oder der Auswuchteinrichtung, vorgegebenen Unwuchttoleranz, ermittelt wird.

5. Verfahren nach einem der vorhergehenden Ansprüche, **dadurch gekennzeichnet, dass** es numerisch, durch eine Steuerung (22) der Auswuchteinrichtung und/oder, insbesondere schrittweitenadaptiv, iterativ durchgeführt wird, insbesondere unter schrittweiser Vergrößerung der Bearbeitungslänge und/oder -tiefe.

6. Verfahren nach einem der vorhergehenden Ansprüche, **dadurch gekennzeichnet, dass** das rotationssymmetrische Bauteil ein Rotorbauteil einer Gasturbine, insbesondere einen, insbesondere integral ausgebildeten, beschaufelten Rotor (10), aufweist.

7. Verfahren zum Auswuchten eines rotationssymmetrischen Bauteils, insbesondere Rotorbauteil (10), insbesondere einer Strömungsmaschine, mithilfe einer Auswuchteinrichtung (20), mit den Schritten:
- Ermitteln (S30-S85) der Wuchtentnahme mittels eines Verfahrens nach einem der vorhergehenden Ansprüche; und
- Bearbeiten (S90) des rotationssymmetrischen Bauteils, insbesondere Rotorbauteil auf Basis der ermittelten Wuchtentnahme.

8. Verfahren nach dem vorhergehenden Anspruch, **gekennzeichnet durch** den Schritt:
- Messen (S10) der Unwucht des rotationssymmetrischen Bauteils, insbesondere Rotorbauteils vor dem Ermitteln der Wuchtentnahme und/oder nach dem Bearbeiten des rotationssymmetrischen Bauteils.

9. System, das zur Durchführung eines Verfahrens nach einem der vorhergehenden Ansprüche eingerichtet ist und/oder aufweist:
- Mittel zum Berechnen einer Kombination von Bearbeitungslänge und -tiefe unter Berücksichtigung einer vorgegebenen maximalen Bearbeitungslänge und minimalen Bearbeitungstiefe derart, dass unter zulässigen Kombinationen zur Kompensation derselben Unwucht die Bearbeitungslänge der berechneten Kombination größer als die Bearbeitungslänge wenigstens einer anderen zulässigen Kombination und zugleich die Bearbeitungstiefe der berechneten Kombination kleiner als die Bearbeitungstiefe dieser anderen Kombination ist.

10. Computerprogrammprodukt mit einem Programmcode, der auf einem von einem Computer lesbaren Medium gespeichert ist, zur Durchführung eines Verfahrens nach einem der Ansprüche 1-6.

## Claims

1. Method for determining a balancing removal for a balancing device (20) for balancing a rotationally symmetrical component, in particular a rotor component (10), in particular a turbomachine, wherein a combination of a machining length (α₁, α₂, a) and depth (r₁, r₂, r) is calculated (S30-S85) by taking into account a predetermined maximum machining length and minimum machining depth such that, under permissible combinations for compensating for the same imbalance, the machining length of the calculated combination is greater than the machining length of at least one other permissible combination and at the same time the machining depth of the calculated combination is smaller than the machining depth of this other combination.

2. Method according to the preceding claim, **characterized in that** the machining depth determines material removal on an inner or outer circumference of the rotationally symmetrical component.

3. Method according to either of the preceding claims, **characterized in that** the maximum machining length and/or minimum machining depth are specified by a user and/or as a function of the balancing device and/or the rotationally symmetrical component.

4. Method according to any of the preceding claims, **characterized in that** the balancing removal is determined on the basis of a measured imbalance of the rotationally symmetrical component to be machined, in particular on the basis of an imbalance tolerance predetermined in particular by a user and/or as a function of the rotationally symmetrical component, in particular the rotor component and/or the balancing device.

5. Method according to any of the preceding claims, **characterized in that** it is carried out numerically by a controller (22) of the balancing device and/or iteratively, in particular step-width adaptively, in particular by a stepwise increase in the machining length and/or depth.

6. Method according to any of the preceding claims, **characterized in that** the rotationally symmetrical component has a rotor component of a gas turbine, in particular an, in particular integral, bladed rotor (10).

7. Method for balancing a rotationally symmetrical component, in particular a rotor component (10), in particular a turbomachine, using a balancing device (20), comprising the steps of:
- determining (S30-S85) the balancing removal by means of a method according to any of the preceding claims; and
- machining (S90) the rotationally symmetrical component, in particular the rotor component, on the basis of the determined balancing removal.

8. Method according to the preceding claim, **characterized by** the step of:
- measuring (S10) the imbalance of the rotationally symmetrical component, in particular the rotor component, before determining the balancing removal and/or after machining the rotationally symmetrical component.

9. System which is designed to carry out a method according to any of the preceding claims and/or has:
- means for calculating a combination of the machining length and depth by taking into account a predetermined maximum machining length and minimum machining depth such that, under permissible combinations for compensating for the same imbalance, the machining length of the calculated combination is greater than the machining length of at least one other permissible combination and at the same time the machining depth of the calculated combination is smaller than the machining depth of this other combination.

10. Computer program product having a program code, which is stored on a computer-readable medium, for carrying out a method according to any of claims 1-6.

## Revendications

1. Procédé de détermination d'un enlèvement de balourd pour un dispositif d'équilibrage (20) permettant d'équilibrer un composant à symétrie de révolution, en particulier un composant de rotor (10), en particulier une turbomachine, dans lequel une combinaison de longueur d'usinage (α₁, α₂, a) et de profondeur d'usinage (r₁, r₂, r) est calculée (S30-S85) en tenant compte d'une longueur d'usinage maximale et d'une profondeur d'usinage minimale prédéfinies de telle sorte que, parmi des combinaisons autorisées pour la compensation du balourd, la longueur d'usinage de la combinaison calculée est supérieure à la longueur d'usinage d'au moins une autre combinaison autorisée et en même temps la profondeur d'usinage de la combinaison calculée est inférieure à la profondeur d'usinage de ladite autre combinaison.

2. Procédé selon la revendication précédente, **caractérisé en ce que** la profondeur d'usinage détermine une élimination de matière sur une circonférence intérieure ou extérieure du composant à symétrie de révolution.

3. Procédé selon l'une quelconque des revendications précédentes, **caractérisé en ce que** la longueur d'usinage maximale et/ou la profondeur d'usinage minimale sont prédéfinies par un utilisateur et/ou en fonction du dispositif d'équilibrage et/ou du composant à symétrie de révolution.

4. Procédé selon l'une quelconque des revendications précédentes, **caractérisé en ce que** l'enlèvement de balourd est déterminé sur la base d'un balourd mesuré du composant à symétrie de révolution à usiner, en particulier sur la base d'une tolérance de balourd prédéfinie, en particulier par un utilisateur et/ou en fonction du composant à symétrie de révolution, en particulier d'un composant de rotor et/ou du dispositif d'équilibrage.

5. Procédé selon l'une quelconque des revendications précédentes, **caractérisé en ce qu'**il est mis en œuvre de manière numérique, par un dispositif de commande (22) du dispositif d'équilibrage et/ou de manière itérative, en particulier par adaptation progressive, en particulier par augmentation progressive de la longueur d'usinage et/ou de la profondeur d'usinage.

6. Procédé selon l'une quelconque des revendications précédentes, **caractérisé en ce que** le composant à symétrie de révolution comporte un composant de rotor d'une turbine à gaz, en particulier un rotor (10) à aubes, en particulier conçu de manière monobloc.

7. Procédé d'équilibrage d'un composant à symétrie de révolution, en particulier d'un composant de rotor (10), en particulier d'une turbomachine, à l'aide d'un dispositif d'équilibrage (20), comportant les étapes suivantes :
- la détermination (S30-S85) de l'enlèvement de balourd au moyen d'un procédé selon l'une quelconque des revendications précédentes ; et
- l'usinage (S90) du composant à symétrie de révolution, en particulier du composant de rotor, sur la base de l'enlèvement de balourd déterminé.

8. Procédé selon la revendication précédente, **caractérisé par** l'étape suivante :
- la mesure (S10) du balourd du composant à symétrie de révolution, en particulier du composant de rotor, avant la détermination de l'enlèvement de balourd et/ou après l'usinage du composant à symétrie de révolution.

9. Système, lequel est conçu pour mettre en œuvre un procédé selon l'une quelconque des revendications précédentes et/ou lequel comprend :
- des moyens permettant de calculer une combinaison de longueur d'usinage et de profondeur d'usinage en tenant compte d'une longueur d'usinage maximale et d'une profondeur d'usinage minimale prédéfinies de telle sorte que, parmi des combinaisons autorisées pour la compensation du balourd, la longueur d'usinage de la combinaison calculée est supérieure à la longueur d'usinage d'au moins une autre combinaison autorisée et en même temps la profondeur d'usinage de la combinaison calculée est inférieure à la profondeur d'usinage de ladite autre combinaison.

10. Produit de programme informatique comportant un code de programme, lequel est sauvegardé sur un support lisible par ordinateur, destiné à la mise en œuvre d'un procédé selon l'une quelconque des revendications 1 à 6.
